(19) Europäisches Patentamt / European Patent Office / Office européen des brevets

(11) **EP 1 878 185 B1**

(12) **FASCICULE DE BREVET EUROPEEN**

(45) Date de publication et mention
de la délivrance du brevet:
**27.07.2011 Bulletin 2011/30**

(21) Numéro de dépôt: **06725487.0**

(22) Date de dépôt: **31.03.2006**

(51) Int Cl.:
**H04L 27/26** $^{(2006.01)}$

(86) Numéro de dépôt international:
**PCT/EP2006/061241**

(87) Numéro de publication internationale:
**WO 2006/117269 (09.11.2006 Gazette 2006/45)**

(54) **Procédé de codage d'un signal multiporteuse de type OFDM/OQAM utilisant des symboles à valeurs complexes, signal, dispositifs et programmes d'ordinateur correspondants**

Verfahren zur Kodierung eines OFDM/OQAM-Signals unter Verwendung von Symbolen mit komplexen Werten und entsprechendes Signal, Einrichtungen und Computerprogramme

Method for the coding of an OFDM/OQAM signal using symbols with complex values, and corresponding signal, devices and computer programs

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **03.05.2005 FR 0504517**

(43) Date de publication de la demande:
**16.01.2008 Bulletin 2008/03**

(73) Titulaire: **FRANCE TELECOM
75015 Paris (FR)**

(72) Inventeurs:
• **JAVAUDIN, Jean-Philippe
F-35000 Rennes (FR)**
• **BOUVET, Pierre-Jean
F-35000 Rennes (FR)**

(74) Mandataire: **Bioret, Ludovic
Cabinet Vidon
16 B, rue de Jouanet - B.P. 90333
Technopole Atalante
35703 Rennes Cedex 07 (FR)**

(56) Documents cités:
**WO-A-02/25884     US-A1- 2003 063 680**

• **HARTMANN M M ET AL INSTITUTE OF ELECTRICAL AND ELECTRONICS ENGINEERS: "Theory and design of multipulse multicarrier systems for wireless communications" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, vol. VOL. 1 OF 2. CONF. 37, 9 novembre 2003 (2003-11-09), pages 492-496, XP010702189 ISBN: 0-7803-8104-1**

**Description**

**1. Domaine de l'invention**

Le domaine de l'invention est celui de la transmission et de la diffusion d'informations numériques. L'invention concerne notamment, mais non exclusivement la transmission et la diffusion d'informations numériques à forte efficacité spectrale, sur une bande de fréquence limitée, par exemple en environnement radiomobile.

L'invention concerne plus précisément les techniques de transmission et de diffusion d'informations au moyen de signaux multiporteuses de type OFDM ("Orthogonal Frequency Division Multiplexing").

**2. Solutions de l'art antérieur**

On connaît à ce jour plusieurs types de modulations multiporteuses de type OFDM.

Parmi celles-ci, la technique de modulation la plus classique comporte un système d'égalisation particulièrement simple, basé sur l'insertion d'un intervalle de garde. Cet intervalle de garde, encore appelé préfixe cyclique, assure un bon comportement face aux échos, au prix d'une perte en efficacité spectrale.

En effet, au cours de cet intervalle de garde, on ne transmet pas d'informations utiles, de manière à garantir que toutes les informations reçues proviennent d'un même symbole. On combat ainsi efficacement les différents phénomènes d'échos dus à l'IES ("Interférence Entre Symboles", ou en anglais ISI) et à l'effet Doppler.

La modulation OFDM/OQAM ("Orthogonal Frequency Division Multiplexing/Offset Quadrature Amplitude Modulation") est une alternative à cette modulation OFDM classique, et a été conçue pour éviter cette perte en efficacité spectrale due à l'introduction d'un intervalle de garde.

Plus précisément, la modulation OFDM/OQAM ne nécessite pas la présence d'un intervalle de garde, ou d'un préfixe cyclique, grâce à un choix judicieux de la fonction prototype modulant chacune des porteuses du signal, qui doit être bien localisée dans l'espace temps-fréquence.

On rappelle en effet que l'ensemble des porteuses d'une modulation multiporteuse forme un multiplex et que chacune des porteuses de ce multiplex est mise en forme à l'aide d'une même fonction prototype, notée $g(t)$, qui caractérise la modulation multiporteuse. En notant $v_0$ l'espacement entre deux porteuses adjacentes du multiplex, et $\tau_0$ l'espacement temporel entre deux symboles multiporteuses émis, le signal émis, à chaque instant $n\tau_0$, sur la $m^{\text{ième}}$ sous-bande de fréquence centrale $v_m$, est $a_{m,n}e^{i\phi m,n}e^{2i\pi v_m t}g(t-n\tau_0)$, où les $a_{m,n}$ représentent les données numériques à transmettre. L'expression du signal émis en bande de base (centré autour de la fréquence $Mv_0$) est alors :

$$s(t) = \sum_n \sum_{m=0}^{2M-1} a_{m,n} e^{i\varphi_{m,n}} e^{2i\pi m v_0 t} g(t - n\tau_0) \qquad (1)$$

On notera qu'on a ici envisagé, par souci de simplification, le cas d'un signal présentant un nombre pair de sous-bandes de fréquence. On peut bien sûr écrire plus généralement le signal sous la forme :

$$s(t) = \sum_n \sum_{m=0}^{M-1} a_{m,n} e^{i\varphi_{m,n}} e^{2i\pi m v_0 t} g(t - n\tau_0) \qquad (2)$$

On rappelle en effet que, selon une technique classique, on introduit des données numériques $a_{m,n}$ de valeur nulle sur les bords du spectre, ce qui modifie le nombre de termes intervenant effectivement dans la somme ci-dessus, et permet par exemple de se ramener à un nombre pair de porteuses.

Les fonctions $g_{m,n}(t) = e^{i\phi m,n}e^{2i\pi m v_0 t}g(t-n\tau_0)$ sont appelées les translatées « temps-fréquence » de $g(t)$. Pour retrouver l'information transmise par chacune des porteuses, il faut choisir $g(t)$ et les phases $\varphi_{m,n}$ de sorte que les translatées « temps-fréquence » ci-dessus soient séparables. Une condition suffisante pour vérifier cette propriété de séparabilité est que ces translatées soient orthogonales, au sens d'un produit scalaire défini sur l'ensemble des fonctions d'énergie finie (qui est un espace de Hilbert au sens mathématique).

L'espace des fonctions d'énergie finie admet les deux produits scalaires ci-dessous :

- le produit scalaire complexe $\langle x|y\rangle = \int_R x(t)y^*(t)dt$

- le produit scalaire réel $\langle x|y\rangle_R = \Re e \int_R x(t)y^*(t)dt$

On définit ainsi deux types de modulation multiporteuse :

- une modulation multiporteuse de type complexe, pour laquelle la fonction *g(t)* choisie garantit une orthogonalité au sens complexe de ses translatées. C'est le cas par exemple de la modulation OFDM classique, encore nommée OFDM/QAM (en anglais "Orthogonal Frequency Division Multiplexing / Quadrature Amplitude Modulation"). Pour une telle modulation, $\varphi_{m,n} = 0$ et les données $a_{m,n}$ sont complexes.
- une modulation multiporteuse de type réel, pour laquelle la fonction *g(t)* choisie garantit une orthogonalité au sens réel de ses translatées. C'est le cas par exemple des modulations OFDM/OQAM. Pour un tel type de modulation, $\varphi_{m,n} = (\pi/2)^*(m+n)$ et les données $a_{m,n}$ sont réelles.

Ainsi, un signal OFDM/OQAM transmis peut s'écrire:

$$s(t) = \sum_n \sum_{m=0}^{M-1} a_{m,n} \underbrace{i^{m+n} e^{2i\pi m v_0 t} g(t - n\tau_0)}_{g_{m,n}(t)} \qquad (3)$$

où $a_{m,n}$ est le symbole réel envoyé sur la $m^{\text{ième}}$ sous porteuse au $n^{\text{ième}}$ temps symbole, M est le nombre de porteuses, $v_0$ est l'espacement inter-porteuses, $\tau_0$ représente la durée d'un symbole OFDM/OQAM, et g est la fonction prototype.
Cette fonction prototype g modulant chaque porteuse en OFDM/OQAM doit être très bien localisée dans le domaine temporel pour limiter l'interférence entre symboles. De plus, elle doit être choisie très bien localisée dans le domaine fréquentiel, pour l'imiter l'interférence entre porteuses (due à l'effet Doppler, au bruit de phase...). Cette fonction doit aussi garantir l'orthogonalité entre sous-porteuses.
Les fonctions mathématiques présentant ces caractéristiques existent, mais les mieux localisées d'entre elles assurent l'orthogonalité uniquement sur des valeurs réelles. Pour cette raison, les symboles transmis par modulation OFDM/OQAM doivent être à valeurs réelles, pour être récupérés sans interférences à la réception.
L'orthogonalité entre les translatées temps fréquence de la fonction prototype est garantie si:

$$\Re e\left( \int_\Re g_{m,n}(t).g_{m',n'}^*(t)dt \right) = \delta_{m,m'}\delta_{n,n'} \qquad (4)$$

L'une des fonctions prototypes vérifiant ces conditions est la fonction prototype IOTA, décrite par exemple dans le document de brevet n° FR 2 733 869, qui a pour caractéristique d'être identique à sa transformée de Fourier.

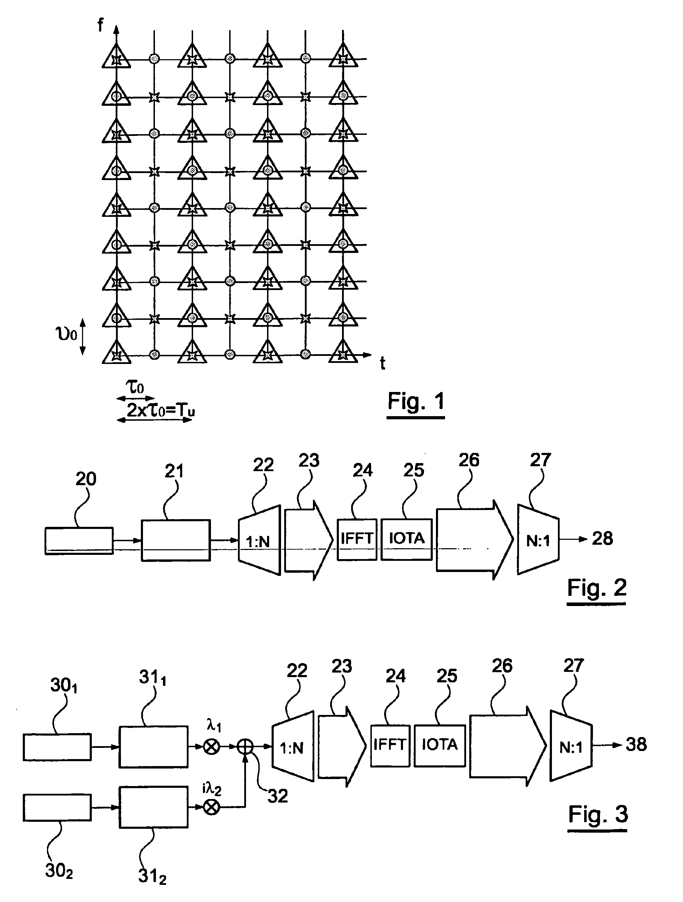

La figure 1 présente une représentation temps-fréquence des symboles à valeurs réelles transmis par modulation OFDM/OQAM et des symboles à valeurs complexes transmis par modulation OFDM classique, sans intervalle de garde.
Sur cette figure, les triangles représentent les symboles OFDM/QAM à valeurs complexes. Les ronds et les étoiles représentent quant à eux des symboles OFDM/OQAM à valeurs réelles. Par exemple, les ronds correspondent à la partie réelle et les étoiles à la partie imaginaire d'un symbole complexe issu d'une constellation QAM que l'on souhaite transmettre en utilisant une modulation OFDM/OQAM.
En effet, pour une modulation OFDM classique de type complexe, les parties réelle et imaginaire d'un complexe issu de la constellation QAM sont transmises simultanément, tous les temps symbole $T_u$; dans le cas d'une modulation OFDM/Offset QAM de type réel, en revanche, les parties réelle et imaginaire sont transmises avec un décalage temporel d'un demi temps symbole ($T_u/2$).
On constate sur cette figure 1 que l'efficacité spectrale de l'OFDM/OQAM est identique à celle de l'OFDM classique sans intervalle de garde. En effet, pour un même espacement inter-porteuses $v_0$, on transmet :

- en OFDM/OQAM, une valeur réelle par porteuse tous les intervalles de temps $\tau_0$
- en OFDM classique sans intervalle de garde, une valeur complexe (i.e. deux valeurs réelles) tous les $2^*\tau_0=T_u$.

La quantité d'information transmise par ces deux modulations est donc identique. Cependant, la nécessité d'introduire un intervalle de garde de durée $T_g$ en OFDM classique, a pour effet de réduire l'efficacité spectrale de l'OFDM classique par rapport à l'OFDM/OQAM, qui s'avère $(T_g+2\tau_0)/2\tau_0$ plus efficace.

Une technique de construction d'un signal multiporteuse à pilotes répartis de type OFDM/OQAM, permettant de limiter l'interférence entre symboles en imposant une ou plusieurs contraintes sur la valeur d'un ou plusieurs éléments de données informatifs que l'on souhaite transmettre, est notamment décrite dans la demande de brevet WO 02/25884.

Il a également été proposé, dans la demande de brevet US 2003/0063680, une technique de modulation OFDM/OQAM permettant la transmission de symboles à valeurs réelles, combinée à une technique d'égalisation à retour de décision par sous-bande.

Par ailleurs, Hartmann et al. ont proposé, dans le document « Theory and design of multipulse multicarrier systems for wireless communications » (IEEE, vol. 1 sur 2, conf. 37, 9 novembre 2003), une technique de modulation multiporteuse « multipulse » (MPMC), selon laquelle on transmet simultanément plusieurs impulsions, correspondant chacune à une fonction prototype $g^{(r)}(t)$, r=1, R. Selon ce document, un signal OFDM/OQAM peut être considéré comme issu d'une modulation MPMC, avec R égal à 4.

## 3. Inconvénients de l'art antérieur

Un inconvénient de ces techniques de l'art antérieur, qu'il s'agisse de la modulation OFDM classique avec intervalle de garde ou de la modulation OFDM/OQAM, est que, pour augmenter leur efficacité spectrale, il est nécessaire d'utiliser des modulations MAQ dont les constellations comptent un grand nombre d'états. Or, de telles modulations MAQ à grand nombre d'états sont très sensibles au bruit et aux erreurs d'estimation du canal de propagation

En effet, comme indiqué ci-dessus, l'efficacité spectrale de la modulation OFDM classique est limitée par la nécessité d'introduire un intervalle de garde destiné à réduire l'interférence entre symboles, au cours duquel aucune information utile ne peut être transmise. Si des symboles complexes peuvent être transmis par cette modulation OFDM, il n'en demeure pas moins que le temps symbole associé est deux fois plus long que pour une modulation OFDM/OQAM.

La modulation OFDM/OQAM, telle que décrite dans la demande de brevet WO 02/25884, dans la demande de brevet US 2003/0063680, ou encore dans le document « *Theory and design of multipulse multicarrier systems for wireless communications* » précité notamment, bien que d'efficacité spectrale plus élevée que la modulation OFDM classique, est quant à elle limitée par la contrainte d'orthogonalité des porteuses dans le domaine réel, qui impose de choisir des filtres de modulation des symboles qui soient bien localisés dans l'espace temps-fréquence, et ne permet donc de transmettre que des symboles à valeurs réelles.

Ainsi, les données transmises étant à valeurs réelles, seule la voie réelle porte des informations « utiles ». Le nombre de symboles envoyés sur un canal de transmission mettant en ouvre une telle modulation OFDM/OQAM n'est donc pas optimisé.

Côté réception, le traitement de la voie imaginaire a alors pour seul but d'analyser les interférences.

## 4. Objectifs de l'invention

L'invention a notamment pour objectif de pallier ces inconvénients de l'art antérieur.

Plus précisément, un objectif de l'invention est de fournir une technique de codage d'un signal multiporteuse de type OFDM/OQAM qui permette d'améliorer les performances d'un lien radio utilisant un tel signal.

Ainsi, un premier objectif de l'invention est de proposer une telle technique qui permette d'améliorer le débit d'informations transmises par une telle modulation, par rapport aux modulations OFDM/OQAM de l'art antérieur ou aux modulations OFDM classiques avec intervalle de garde. Notamment, l'invention a pour objectif de doubler, ou à tout le moins d'augmenter de manière significative, le nombre de symboles envoyés sur un canal de transmission mettant en oeuvre une telle modulation.

Un deuxième objectif de l'invention est de proposer une telle technique qui permette d'améliorer le taux d'erreur binaire associé aux modulations OFDM/OQAM par rapport aux techniques de modulation OFDM/QAM ou OFDM/OQAM de l'art antérieur. Notamment, l'invention a pour objectif de proposer une telle technique qui présente une efficacité spectrale importante, même en utilisant des constellations de modulation MAQ présentant un nombre d'états réduit.

L'invention a encore pour objectif de fournir une telle technique qui exploite au mieux la diversité du canal de transmission mettant en oeuvre une telle modulation OFDM/OQAM.

L'invention a aussi pour objectif de proposer une telle technique qui soit particulièrement bien adaptée aux transmissions de type multi-antennes (ou MIMO).

Un autre objectif de l'invention est de fournir une telle technique de codage d'un signal multiporteuse de type OFDM/OQAM qui permette une réception de bonne qualité du signal, même en présence d'interférence intrinsèque entre les symboles ou entre les porteuses.

## 5. Exposé de l'invention

Ces objectifs, ainsi que d'autres qui apparaîtront par la suite, sont atteints à l'aide d'un procédé de codage d'un signal multiporteuse de type OFDM/OQAM formé d'une succession temporelle de symboles constitués d'un ensemble d'éléments de données, chacun desdits éléments de données modulant une fréquence porteuse dudit signal.

Selon l'invention, chacun desdits éléments de données est formé par sommation de deux valeurs réelles en quadrature correspondant chacune à un mot binaire d'un signal source, modulé selon une constellation de modulation prédéterminée, de façon à transmettre des informations sur une voie réelle et sur une voie imaginaire desdits symboles OFDM/OQAM.

Ainsi, l'invention repose sur une approche tout à fait nouvelle et inventive de la modulation multiporteuse de type OFDM/OQAM. En effet, alors que les techniques de l'art antérieur imposaient toutes que les symboles transmis dans un signal OFDM/OQAM soit à valeurs réelles, afin de garantir l'orthogonalité entre les porteuses dans le domaine réel, la technique de l'invention consiste à transmettre des symboles à valeurs complexes en OFDM/OQAM. Ainsi, en référence à la figure 1, la technique de l'invention permet de transmettre en OFDM/OQAM une valeur complexe tous les $\tau_0$, ce qui accroît considérablement l'efficacité spectrale de la modulation par rapport aux modulations OFDM classique, avec ou sans intervalle de garde, et aux modulations OFDM/OQAM de l'art antérieur.

On notera que, par symboles à valeurs réelles, on entend ici et dans l'ensemble de ce document, des symboles véhiculant de l'information sur une seule dimension, par opposition aux symboles à valeurs complexes du signal OFDM/OQAM de la présente invention, qui utilise deux voies en quadrature. La dimension unique des symboles à valeurs réelles de l'art antérieur correspond à la voie dite réelle du signal OFDM/OQAM de l'invention.

La technique de l'invention va à l'encontre des préjugés de l'Homme du Métier, qui a toujours considéré qu'une telle transmission de symboles à valeurs complexes en OFDM/OQAM n'était pas possible, en raison de l'interférence intrinsèque générée entre les parties réelle et imaginaire des symboles qui seraient ainsi envoyés, même en l'absence de canal de transmission.

Les inventeurs de la présente technique de codage ont cependant choisi d'accepter une telle augmentation des interférences entre symboles, liée à la transmission de données sur les parties imaginaires des symboles OFDM/OQAM, afin d'augmenter également le nombre de symboles transmis.

Ainsi, la technique de codage OFDM/OQAM de l'invention permet d'améliorer le débit de transmission par rapport aux modulations OFDM/OQAM antérieures, en doublant le nombre de symboles envoyés sur le canal de transmission (le débit effectif transmis n'est cependant pas doublé, en raison de l'augmentation du taux d'erreur binaire liée à l'apparition d'interférence intrinsèque entre symboles).

La technique de codage de l'invention peut aussi permettre, à débit de transmission identique à celui des modulations OFDM/OQAM antérieures, d'améliorer le taux d'erreur binaire en utilisant un rendement de codage moindre et en profitant mieux de la diversité du canal.

Avantageusement, ladite sommation est une sommation pondérée, de façon à ce que l'une desdites voies présente un niveau de puissance plus élevé. On peut ainsi ajuster la puissance des sources, de façon par exemple à prendre en compte une différence de qualité des canaux de transmission associés à deux utilisateurs recevant pour l'un la voie réelle et pour l'autre la voie imaginaire.

Dans une première variante de mise en oeuvre de l'invention, lesdits signaux sources sont corréles. On peut ainsi accroître la qualité de réception des informations utiles qu'ils véhiculent.

Par exemple, l'un desdits signaux sources véhicule des informations de redondance liées aux informations véhiculées par l'autre signal source.

On peut aussi envisager que lesdits signaux sources soient identiques, mais subissent un codage de canal et/ou un entrelacement différent sur chacune desdites voies.

Dans une deuxième variante de mise en oeuvre de l'invention, lesdits signaux sources sont des signaux indépendants l'un de l'autre.

On peut ainsi transmettre, par le même signal OFDM/OQAM, des informations utiles différentes, destinées par exemple à deux utilisateurs distincts.

Selon une caractéristique avantageuse de l'invention, les informations transmises sur chacune desdites voies comprennent d'une part des informations sources et d'autre part des informations de redondance calculées à partir desdites informations sources. Un tel codage de canal permet en effet d'accroître la robustesse et d'améliorer la qualité de récupération des informations sources en réception.

Dans un mode de réalisation avantageux de l'invention, lesdits éléments de données sont mis en forme par la fonction prototype IOTA, qui présente la particularité d'être identique à sa tranformée de Fourier, et est particulièrement bien localisée dans l'espace temps-fréquence. Toute autre fonction prototype peut également être utilisée dans le cadre de l'invention.

Préférentiellement, on affecte un niveau de protection différent aux informations transmises sur chacune desdites voies.

En particulier, ce niveau de protection peut dépendre d'un codage de canal et/ou d'un ordre de ladite constellation de modulation prédéterminée. On peut ainsi par exemple appliquer deux codes correcteurs d'erreurs distincts sur chacune des voies, différant en termes de taux et/ou de structure (par exemple, on utilise un code convolutif sur une voie et un turbo-code sur l'autre voie).

L'invention concerne aussi un signal multiporteuse de type OFDM/OQAM formé d'une succession temporelle de symboles constitués d'un ensemble d'éléments de données, chacun desdits éléments de données modulant une fréquence porteuse dudit signal. Chacun desdits éléments de données est formé par sommation de deux valeurs réelles en quadrature correspondant chacune à mot binaire d'un signal source, modulé selon une constellation de modulation prédéterminée, de façon à transmettre des informations sur une voie réelle et sur une voie imaginaire desdits symboles OFDM/OQAM.

L'invention concerne également un dispositif de codage d'un signal multiporteuse de type OFDM/OQAM formé d'une succession temporelle de symboles constitués d'un ensemble d'éléments de données, chacun desdits éléments de données modulant une fréquence porteuse dudit signal. Un tel dispositif de codage comprend des moyens de formation de chacun desdits éléments de données par sommation de deux valeurs réelles en quadrature correspondant chacune à un mot binaire d'un signal source modulé selon une constellation de modulation prédéterminée, de façon à transmettre des informations sur une voie réelle et sur une voie imaginaire desdits symboles OFDM/OQAM.

L'invention concerne encore un procédé de décodage d'un signal multiporteuse de type OFDM/OQAM reçu, comme révélé dans la revendication 11.

L'invention concerne aussi un produit programme d'ordinateur téléchargeable depuis un réseau de communication et/ou stocké sur un support lisible par ordinateur et/ou exécutable par un microprocesseur, comprenant des instructions de code de programme pour la mise en oeuvre du procédé de codage d'un signal multiporteuse tel que décrit précédemment.

Elle concerne encore un produit programme d'ordinateur téléchargeable depuis un réseau de communication et/ou stocké sur un support lisible par ordinateur et/ou exécutable par un microprocesseur, comprenant des instructions de code de programme pour la mise en oeuvre des étapes du procédé de décodage d'un signal multiporteuse tel que décrit précédemment.

L'invention concerne enfin un dispositif de décodage d'un signal multiporteuse de type OFDM/OQAM reçu, tel que révélé dans la revendication 14.

6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1, déjà commentée en relation avec l'art antérieur, est une représentation temps-fréquence des symboles à valeurs complexes transmis selon une modulation OFDM classique et des symboles à valeurs réelles transmis selon une modulation OFDM/OQAM de l'art antérieur ;
- la figure 2 illustre un synoptique de la chaîne d'émission d'un signal multiporteuse de type OFDM/OQAM de l'art antérieur ;
- la figure 3 présente un synoptique de la chaîne d'émission d'un signal multiporteuse de type OFDM/OQAM selon l'invention ;
- la figure 4 présente un exemple de mise en oeuvre de l'invention dans le cadre d'un turbo code de rendement 1/3 ;
- les figures 5 et 6 présentent respectivement des schémas simplifiés de la structure de dispositifs de codage et de décodage de l'invention ;
- la figure 7 illustre les performances de la technique de codage de l'invention par rapport à l'art antérieur.

**7. Description d'un mode de réalisation de l'invention**

Le principe général de l'invention consiste à ajouter aux symboles réels transmis en OFDM/OQAM des informations supplémentaires sur leur partie imaginaire pour en faire des symboles complexes. Contrairement aux préjugés de l'Homme du Métier, qui a toujours considéré que la transmission de symboles à valeurs complexes en OFDM/OQAM n'était pas possible, en raison de l'interférence intrinsèque entre symboles qui serait alors générée à l'émission, l'invention consiste donc à transmettre des informations, et sur la voie réelle, et sur la voie imaginaire de symboles OFDM/OQAM.

Dans le cadre d'une modulation OFDM/OQAM à symboles à valeurs complexes, la partie imaginaire de la projection du signal reçu sur la base des translatées de la fonction prototype n'est pas nulle. Il apparaît donc un terme imaginaire perturbateur, qui vient s'ajouter au signal réel démodulé, et qu'il faut corriger avant de procéder à l'estimation du canal.

La projection complexe du signal, même parfaitement transmis, est en effet entachée d'une IES (interférence entre symboles) intrinsèque, liée à l'utilisation à l'émission de symboles à valeurs complexes. On entend par IES une interférence entre symboles temporels et/ou entre porteuses.

Passant outre cette interférence intrinsèque perturbatrice, la technique de codage de l'invention repose sur la transmission d'informations utiles sur la partie imaginaire de symboles OFDM/OQAM, qui sont donc à valeurs complexes.

On présente, en relation avec les figures 2 et 3, un mode de réalisation d'une telle technique de codage de l'invention, sous forme d'une comparaison des chaînes d'émission de signaux OFDM/OQAM de l'art antérieur et de l'invention.

Dans toute la suite de ce document, on décrit un mode de réalisation particulier de l'invention dans lequel la fonction prototype utilisée pour mettre en forme les symboles OFDM/OQAM est la fonction IOTA. Toute autre fonction prototype OFDM/OQAM peut bien sûr également être utilisée.

La figure 2 présente un synoptique d'une chaîne de codage et d'émission d'un signal multiporteuse de type OFDM/OQAM à symboles à valeurs réelles de l'art antérieur.

On considère une source 20 d'informations utiles à transmettre sous la forme d'un signal multiporteuse de type OFDM/OQAM. Ces informations utiles sont des éléments binaires, organisés sous la forme de mots, qui alimentent un modulateur MAQ (modulation d'amplitude en quadrature) réel 21. On obtient ainsi, en sortie du modulateur 21, une succession de symboles d'une constellation de type QPSK, 16-QAM, 64-QAM, etc., encore appelée signal M-aire.

Une conversion série-parallèle 22 du signal M-aire permet d'obtenir N flux 23 de symboles à valeurs réelles, présentant chacun un débit de $1/\tau_0$ symboles par seconde. Par transformation de Fourier rapide inverse IFFT 24 et filtrage polyphase 25 (ici à partir de la fonction prototype IOTA), on obtient en parallèle N symboles OFDM/OQAM 26, au débit de $1/\tau_0$ symboles par seconde.

Après conversion parallèle/série 27, le signal multiporteuse 28 constitué de symboles OFDM/OQAM à valeurs réelles peut être émis sur une ou plusieurs antennes (qui n'ont pas été représentées).

Comme indiqué précédemment, la technique de codage de l'invention consiste à rajouter aux symboles réels 26 transmis en OFDM/OQAM des informations supplémentaires sur leur partie imaginaire, pour en faire des symboles complexes. Les informations véhiculées sur cette partie imaginaire peuvent être soit des informations indépendantes de celles véhiculées sur la partie réelle, soit les mêmes informations, soit encore de la redondance liée à l'information véhiculée sur la partie réelle.

La figure 3 illustre les modifications à apporte à la chaîne d'émission de la figure 2 pour réaliser ce nouveau type de modulation OFDM/OQAM.

On considère désormais deux sources d'informations utiles $30_1$ et $30_2$, qui peuvent ou non être dépendantes l'une de l'autre. Ainsi, ces deux sources $30_1$ et $30_2$ peuvent délivrer les mêmes mots binaires. Elles peuvent également être totalement décorrélées l'une de l'autre, de sorte qu'il n'existe aucun rapport entre les mots binaires issus de chacune de ces deux sources $30_1$ et $30_2$. Enfin, les mots binaires issus de l'une de ces deux sources peuvent correspondre à des informations de redondance de l'autre source.

Comme dans la figure 2, les mots binaires issus de chacune des deux sources $30_1$ et $30_2$ subissent une modulation MAQ réelle $31_1$ et $31_2$, de façon à être transformés en symboles à valeurs réelles d'une constellation de type QPSK, 16-QAM, etc.

Les signaux M-aire issus de chacun des deux modulateurs $31_1$ et $31_2$ sont alors pondérés, respectivement par un coefficient réel $\lambda_1$ et par un coefficient complexe $i\lambda_1$ (ou $\lambda_1$ et $\lambda_1$ sont des scalaires), puis sommés 32, afin de former une succession de symboles OQAM à valeurs complexes, présentant un débit de $N/\tau_0$ symboles par seconde.

Comme dans la figure 2, on procède alors à une conversion série-parallèle 22 permettant d'obtenir N flux 23 de symboles OQAM à valeurs complexes, présentant chacun un débit de $1/\tau_0$ symboles par seconde. Ces N flux 23 subissent une transformée de Fourier rapide inverse ou IFFT 24, puis sont mis en forme par filtrage polyphase IOTA 25, de façon à générer des symboles OFDM/OQAM 26, à un débit de $1/\tau_0$ symboles par seconde. Après conversion parallèle-série 27, on obtient alors le signal multiporteuse de type OFDM/OQAM 38 à symboles à valeurs complexes de l'invention.

En se référant à l'équation (3), l'invention consiste donc à transmettre des symboles $a_{m,n}$ à valeurs complexes et à les moduler avec les fonctions prototypes de l'OFDM/OQAM.

Comme illustré par la figure 3, les puissances des sources 30, et $30_2$ peuvent être ajustées en jouant sur la valeur des coefficients scalaires réels $\lambda_i$. Par exemple, on peut choisir d'émettre la voie réelle des symboles OFDM/OQAM avec une puissance plus élevée que la voie imaginaire, et on choisit alors $\lambda_1 > \lambda_2$. La voie dite réelle correspond ici aux symboles réels déphasés représentés sous forme de ronds et d'étoiles sur la figure 1.

On notera par ailleurs que, dans la chaîne d'émission de la figure 2 comme dans celle de la figure 3, les sources 20, $30_1$ et $30_2$ peuvent être des données encodées par un codeur de canal (non représenté) destiné à introduire de la redondance dans le signal à émettre. Ces données peuvent également subir un entrelacement II.

Dans le mode de réalisation de la figure 3, dans le cas où les sources 30, et $30_2$ sont identiques, on leur lait subir de préférence un codage de canal et/ou un entrelacement différents, de façon à éviter d'émettre exactement les mêmes données sur les deux voies réelle et imaginaire du signal.

L'invention trouve des applications dans le contexte des transmissions multi-antennes. Ainsi, lorsque le signal OFDM/OQAM à symboles à valeurs complexes 38 doit être envoyé par un émetteur comprenant plusieurs antennes, les parties réelles et imaginaires des symboles OFDM/OQAM peuvent être transmis séparément sur deux ensembles d'antennes distincts. De cette façon, on moyenne l'interférence entre les symboles de façon à améliorer les performances d'une transmission MIMO-OFDM ("Multiple Input Multiple Output", pour "Entrées Multiples Sorties Multiples").

De même, lorsque l'émetteur comprend plusieurs antennes, la technique de codage STBC (pour "Space-Time Block Codes", "codes en blocs espace-temps) (telle qu'utilisée en OFDM classique) peut également être mise en oeuvre dans le cadre de l'invention.

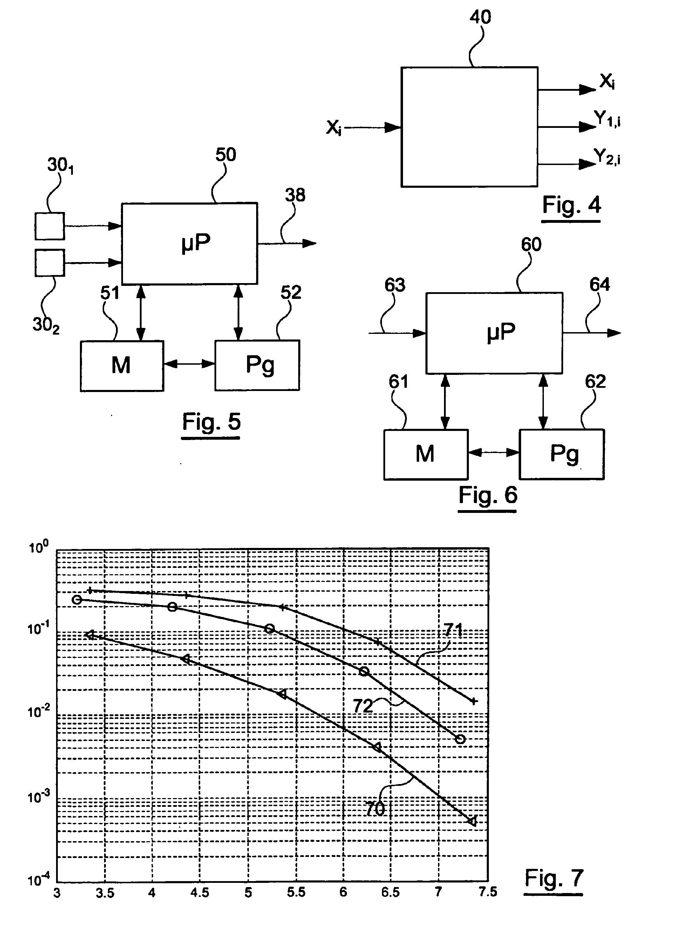

Comme indiqué ci-dessus, les données issues des deux sources $30_1$ et $30_2$ peuvent être, soit indépendantes, soit corrélées. On décrit ci-après, en relation avec la figure 4, un exemple plus particulier de réalisation de l'invention dans le cas où ces deux sources sont corrélées.

La figure 4 illustre un turbo codeur 40 de rendement 1/3, qui reçoit en entrée une succession de symboles $X_i$ et délivre sur chacune de ses trois sorties des séquences $X_i$, $Y_{1,i}$ et $Y_{2,i}$ calculées à partir de la séquence $X_i$ d'entrée.

On choisit par exemple de transmettre les trois sorties du codeur 40 sur les deux sources $30_1$ et $30_2$ de la figure 3, en construisant les séquences suivantes :

- on transmet par exemple sur la première source référencée $30_1$ la séquence $[X_i \, Y_{1,i} \, X_{i+1} \, Y_{2,i+1} \, X_{i+2} \, Y_{1,i+2} \, X_{i+3}...]$ ;
- on transmet par exemple sur la deuxième source référencée $30_2$ la séquence $[X_i \, Y_{2,i} \, X_{i+1} \, Y_{1,i+1} \, X_{i+2} \, Y_{2,i+2} X_{i+3} ...]$.

De façon avantageuse, les données sont ensuite entrelacées avant modulation et les entrelacements des deux sources sont indépendants.

on décrit ci-après un exemple de réalisation détaillé de l'invention, pour une modulation OFDM/OQAM utilisant la forme d'onde IOTA. Une simulation a été réalisée à partir des paramètres suivants :

- Taille de la FFT : 512 ;
- Nombre de porteuses modulées : 345 ;
- Canal : AWGN ;
- Codage correcteur d'erreur : code convolutif de longueur de contrainte K=7 de rendement 1/2.

Les flux sur les 2 voies (réelle et imaginaire) sont indépendants. Les coefficients d'ajustement des puissances valent : $\lambda_1 = 1$ et $\lambda_2 = 0{,}6$. Avec une telle différence, le ratio en puissance entre les 2 voies est de 4,4 dB.

En réception, on utilise un algorithme de décodage itératif tel que décrit dans la demande de brevet conjointe WO 2006/117268, déposée le même jour que la présente demande de brevet, au nom des mêmes titulaires et intitulée "Procédé de décodage itératif d'un signal OFDM/OQAM utilisant des symboles à valeurs complexes, dispositif et programme d'ordinateur correspondants".

Dans ce contexte, le principe général de l'invention repose sur le décodage alternatif et itératif des voies réelle et imaginaire du signal reçu, en soustrayant au signal obtenu en sortie d'un démodulateur OFDM/OQAM, une interférence calculée à partir de l'une des voies. A partir du signal obtenu, on calcule l'interférence générée par l'autre voie et on vient la retirer au signal sortant du démodulateur OFDM/OQAM.

On rappelle que la transmission en OFDM/OQAM de données complexes et non réelles provoque une interférence intrinsèque à l'émission entre les symboles. La nature de cette interférence est connue du récepteur et peut donc être éliminée en tout ou en partie à la réception. Le récepteur de l'invention comprend deux modules. Le premier module réalise une démodulation OFDM/OQAM classique du signal multiporteuse reçu sur l'antenne. A la différence cependant d'un démodulateur OFDM/OQAM de l'art antérieur, qui ne considère que la partie réelle du signal reçu, on conserve, en sortie du premier module de démodulation, l'ensemble du signal démodulé r, à savoir la partie réelle et la partie imaginaire des symboles reçus.

Le deuxième module met quant à lui en oeuvre un processus itératif de récupération, à partir du signal complexe démodulé r, d'une estimation $d_1(p)$ et $d_2(p)$ des informations transmises sur les voies réelle et imaginaire du signal OFDM/OQAM, où l'indice p désigne le rang de l'itération considérée.

Plus précisément, le premier module de démodulation OFDM/OQAM réalise les opérations suivantes:

- Conversion série parallèle;
- FFT;
- Filtrage polyphasé;
- Egalisation;
- Conversion parallèle série.

Comme indiqué ci-dessus, on conserve cependant en sortie du premier module à la fois la partie réelle et la partie imaginaire du signal.

On présente désormais plus en détail le fonctionnement du deuxième module de traitement itératif. Son principe consiste à soustraire au signal obtenu en sortie du démodulateur OFDM/OQAM, une interférence calculée à partir de l'une des deux voies, de préférence la voie la plus puissante. A partir du signal obtenu, on calcule l'interférence générée par l'autre voie moins puissante et on vient la retirer au signal sortant du démodulateur OFDMIOQAM. On recommence ainsi de suite jusqu'à ce que le processus converge, ce qui intervient au bout de seulement trois ou quatre itérations. La sélection de chacune des voies se fait en prenant la partie réelle ou imaginaire du signal. On notera que le récepteur sait quelle a été la voie émise avec la puissance la plus élevée.

Les différentes étapes mises en oeuvre de façon successive par le deuxième module sont donc les suivantes :

- sélection d'une des deux voies sur le signal égalisé r. De façon préférentielle, il s'agit de la voie la plus puissante (par exemple on a choisi la voie réelle, en retenant la partie réelle du signal Re(r)) ;
- conversion du signal Maire en signal binaire souple (i.e. représentatif d'au moins une valeur binaire et d'au moins une information de confiance associée) comportant une confiance calculée par exemple à partir de l'estimation de canal;
- désentrelacement $\Pi^{-1}$ du signal binaire souple;
- décodage de canal $CC^{-1}$, permettant de calculer, à partir du signal binaire souple (i.e. représentatif d'une valeur binaire et d'une information de confiance associée) désentrelacé, un signal binaire amélioré $x_1$ comportant également une mesure de confiance, ainsi qu'un signal binaire décodé $d_1$. Le signal binaire décodé $d_1$ constitue l'information que délivrera le récepteur au final;
- entrelacement $\Pi$ du signal binaire amélioré $x_1$;
- conversion du signal binaire amélioré entrelacé en signal Maire amélioré souple (i.e. associé à une confiance) $x_1^{(1)}$ par modulation MAQ réelle ;
- calcul du terme interfèrent intrinsèque généré par la voie sélectionnée (ici la voie réelle) délivrant un signal interfèrent $y(x_1^{(1)})$;
- soustraction du signal interfèrent $i * y(x_1^{(1)})$ affectant la deuxième voie au signal égalisé r pour délivrer un signal reçu amélioré. On notera que la deuxième voie est ici la voie imaginaire, c'est pourquoi l'on multiplie par i le signal interfèrent $y(x_1^{(1)})$ avant de retrancher ce terme interfèrent au signal démodulé r ;
- sélection de l'autre voie de ce signal amélioré obtenu après soustraction Dans l'exemple, il s'agit de la voie imaginaire, que l'on sélectionne en prenant la partie imaginaire du signal amélioré;
- conversion Maire-binaire du signal de la voie imaginaire par démodulation MAQ réelle pour obtenir un signal binaire souple (i.e. un signal représentatif d'une valeur binaire et d'une information de confiance associé, "soft bits") qui peut également comporter une confiance calculée par exemple à partir de l'estimation de canal ;
- désentrelacement $\Pi^{-1}$ du signal binaire souple;
- décodage de canal $CC^{-1}$, permettant de calculer, à partir du signal binaire souple désentrelacé, un signal binaire amélioré $x_2$ comportant également une mesure de confiance, ainsi qu'un signal binaire décodé $d_2$. Le signal binaire décodé $d_2$ constitue l'autre partie de l'information que délivrera le récepteur au final;
- entrelacement $\Pi$ du signal binaire amélioré $X_2$;
- conversion du signal binaire amélioré entrelacé en signal Maire amélioré souple (i.e. associé à une confiance) $x_2^{(1)}$ par modulation MAQ réelle ;
- calcul du terme interfèrent intrinsèque généré par la voie sélectionnée (ici la voie imaginaire) délivrant un signal interfèrent $y(x_2^{(1)})$;
- soustraction du signal interfèrent $y(x_2^{(1)})$ affectant la première voie au signal égalisé r pour délivrer un signal amélioré.

L'ensemble des étapes successives ci-dessus forme la première itération du processus itératif mis en oeuvre par le deuxième module de traitement. A l'issue de cette première itération, on peut alors reboucler sur la première étape, et sélectionner à nouveau la voie complémentaire de la dernière voie traitée (à savoir sélectionner la voie réelle dans le cas considéré), de façon à débuter une deuxième itération d'estimation.

On utilise deux constellations Offset-QPSK ("Offset Quadrature Phase Shift Keying") avec des rendements de code 1/2 sur les deux voies réelle et imaginaire. Pour comparaison, on simule une constellation Offset-16-QAM (uniquement sur la voie réelle) encodée par le même code convolutif et avec le même rendement de codage, qui représente donc la technique de l'art antérieur où les symboles OFDM/OQAM sont à valeurs réelles.

Les courbes de la figure 7 illustrent les performances de la technique de codage de l'invention, sous la forme du taux d'erreur binaire, exprimé en décibels (dB), en fonction du rapport C/N ("Carrier To Noise Ratio", rapport porteuse à bruit).

Même dans le cas le plus simple possible où l'on ne peut pas tirer parti de la diversité en temps-fréquence du canal, lorsque les deux voies ont le même codage et sont indépendantes l'une de l'autre, on observe une amélioration des performances. En effet, l'écart entre le taux d'erreur binaire entre l'Offset-QPSK sur la voie réelle (courbe référencée 70) avec l'Offset-16QAM (courbe référencée 72) est d'environ 0,9 dB alors que l'écart entre cette même Offset-16QAM et l'Offset-QPSK sur la voie imaginaire (courbe référencée 71) est d'environ 0,6 dB.

Ces résultants sont particulièrement intéressants par exemple pour transmettre sur les deux voies (réelle et imaginaire) des flux de données ne nécessitant pas le même taux d'erreur en réception. Ils le sont également dans le cas où les deux voies (réelle et imaginaire) sont transmises à deux utilisateurs associés à des canaux de transmission présentant des rapports signal à bruit différents. La puissance relative des deux voies peut alors être ajustée pour tenir compte de la différence de qualité des canaux de ces deux utilisateurs.

On présente désormais succinctement, en relation avec les figures 5 et 6, la structure simplifiée des dispositifs de codage et de décodage de l'invention.

Le dispositif de codage de la figure 5 comprend une mémoire M 51, et une unité de traitement 50 équipée d'un processeur $\mu$P, qui est piloté par le programme d'ordinateur Pg 52.

L'unité de traitement 50 reçoit en entrée des mots binaires issus de deux sources $30_1$ et $30_2$, qui peuvent être indépendantes ou corrélées. A partir de ces successions de mots binaires, le microprocesseur $\mu$P construit, selon les instructions du programme Pg 52, un signal multiporteuse de type OFDM/OQAM dont les symboles à valeurs complexes sont obtenus par sommation pondérée de deux symboles de constellation à valeurs réelles en quadrature obtenus par modulation MAQ réelle des mots binaires. Une telle construction par le microprocesseur $\mu$P comprend également des opérations d'IFFT, de filtrage polyphase, et de conversion S/P et P/S.

En sortie de l'unité de traitement 50, on obtient un signal multiporteuse 38 de type OFDM/OQAM dont les symboles sont à valeurs complexes.

Le dispositif de décodage de la figure 6 comprend quant à lui une mémoire M 61, et une unité de traitement 60 équipée d'un processeur $\mu$P, qui est piloté par le programme d'ordinateur Pg 62.

L'unité de traitement 60 reçoit en entrée un signal multiporteuse 63 de type OFDMTOQAM dont les symboles sont à valeurs complexes, qui a été véhiculé par un canal de transmission après avoir été émis en sortie du dispositif de codage de la figure 5.

Sur réception du signal multiporteuse 63, le microprocesseur $\mu$P sélectionne, selon les instructions du programme Pg 52, les informations associées à l'une des deux voies réelle ou imaginaire des symboles OFDM/OQAM, puis réalise un traitement sélectif des informations sélectionnées, de façon à délivrer une estimation 64 du signal source associé à cette voie. Ces opérations peuvent être réalisées successivement pour chacune des deux voies, ou systématiquement pour l'une des voies, et éventuellement pour l'autre voie si la qualité de réception du signal satisfait un critère prédéterminé.

Ces opérations peuvent également être réalisées de manière itérative, le microprocesseur $\mu$P sélectionnant successivement chacune des deux voies, et déterminant l'interférence intrinsèque générée par l'autre voie pour la retrancher au signal reçu, et ainsi affiner l'estimation du signal source associé à chacune des deux voies.

## Revendications

1. Procédé de codage d'un signal multiporteuse de type OFDM/OQAM formé d'une succession temporelle de symboles constitués d'un ensemble d'éléments de données, chacun desdits éléments de données modulant une fréquence porteuse dudit signal,
caractérisé en ce que chacun desdits éléments de données est formé par sommation (32) de deux valeurs réelles en quadrature correspondant chacune à un mot binaire d'un signal source ($30_1$, $30_2$), modulé selon une constellation de modulation prédéterminée ($31_1$, $31_2$),
de façon à transmettre des informations sur une voie réelle et sur une voie imaginaire desdits symboles OFDM/OQAM.

2. Procédé de codage selon la revendication 1, caractérisé en ce que ladite sommation est une sommation pondérée, de façon à ce que l'une desdites voies présente un niveau de puissance plus élevé.

3. Procédé de codage selon l'une quelconque des revendications 1 et 2, caractérisé en ce que lesdits signaux sources ($30_1$, $30_2$) sont corrélés.

4. Procédé de codage selon la revendication 3, caractérisé en ce que l'un desdits signaux sources véhicule des informations de redondance liées aux informations véhiculées par l'autre signal source.

5. Procédé de codage selon la revendication 3, caractérisé en ce que lesdits signaux sources ($30_1$, $30_2$) sont identiques et subissent un codage de canal et/ou un entrelacement différent sur chacune desdites voies.

**6.** Procédé de codage selon l'une quelconque des revendications 1 et 2, **caractérisé en ce que** lesdits signaux sources ($30_1$, $30_2$) sont des signaux indépendants l'un de l'autre.

**7.** Procédé de codage selon l'une quelconque des revendications 1 à 6, **caractérisé en ce que** les informations transmises sur chacune desdites voies comprennent d'une part des informations sources et d'autre part des informations de redondance calculées à partir desdites informations sources.

**8.** Procédé de codage selon l'une quelconque des revendications 1 à 7, **caractérisé en ce qu'**on affecte un niveau de protection différent aux informations transmises sur chacune desdites voies, ledit niveau de protection dépendant d'un codage de canal et/ou d'un ordre de ladite constellation de modulation prédéterminée.

**9.** Signal multiporteuse de type OFDM/OQAM formé d'une succession temporelle de symboles constitués d'un ensemble d'éléments de données, chacun desdits éléments de données modulant une fréquence porteuse dudit signal, **caractérisé en ce que** chacun desdits éléments de données est formé par sommation de deux valeurs réelles en quadrature correspondant chacune à mot binaire d'un signal source, modulé selon une constellations de modulation prédéterminée,
de façon à transmettre des informations sur une voie réelle et sur une voie imaginaire desdits symboles OFDM/OQAM.

**10.** Dispositif de codage d'un signal multiporteuse de type OFDM/OQAM formé d'une succession temporelle de symboles constitués d'un ensemble d'éléments de données, chacun desdits éléments de données modulant une fréquence porteuse dudit signal,
**caractérisé en ce qu'**il comprend des moyens (50) de formation de chacun desdits éléments de données par sommation de deux valeurs réelles en quadrature correspondant chacune à un mot binaire d'un signal source modulé selon une constellation de modulation prédéterminée,
de façon à transmettre des informations sur une voie réelle et sur une voie imaginaire desdits symboles OFDM/OQAM.

**11.** Procédé de décodage d'un signal multiporteuse de type OFDM/OQAM reçu, ledit signal étant formé d'une succession temporelle de symboles constitués d'un ensemble d'éléments de données, chacun desdits éléments de données modulant une fréquence porteuse dudit signal,
**caractérisé en ce que**, chacun desdits éléments de données étant formé, au codage, par sommation de deux valeurs réelles en quadrature correspondant chacune à un mot binaire d'un signal source modulé selon une constellation de modulation prédéterminée, de façon à transmettre des informations sur une voie réelle et sur une voie imaginaire desdits symboles OFDM/OQAM,
ledit procédé de décodage comprend :

- une phase de démodulation OFDM/OQAM dudit signal reçu délivrant un signal complexe égalisé ;
- une phase de traitement dudit signal complexe égalisé comprenant au moins une itération des étapes de:
- sélection d'une desdites voies dudit signal complexe égalisé, appelée première voie ;
- traitement de ladite première voie permettant de délivrer une estimation dudit signal source correspondant à ladite première voie, appelé premier signal source estimé ;
- estimation d'une interférence intrinsèque générée par ladite première voie et affectant l'autre desdites voies, appelée deuxième voie, délivrant un signal interférent estimé ;
- soustraction dudit signal interférent estimé audit signal complexe égalisé, de façon à obtenir un signal complexe amélioré ;
- sélection de ladite deuxième voie dudit signal complexe amélioré ;
- traitement de ladite deuxième voie permettant de délivrer une estimation dudit signal source correspondant à ladite deuxième voie, appelé deuxième signal source estimé.

**12.** Produit programme d'ordinateur téléchargeable depuis un réseau de communication et/ou stocké sur un support lisible par ordinateur et/ou exécutable par un microprocesseur, **caractérisé en ce qu'**il comprend des instructions de codé de programme pour la mise en oeuvre du procédé de codage d'un signal multiporteuse selon l'une quelconque des revendications 1 à 8.

**13.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre des étapes du procédé de décodage d'un signal multiporteuse selon

**EP 1 878 185 B1**

la revendication 11.

**14.** Dispositif de décodage d'un signal multiporteuse (63) de type OFDM/OQAM reçu, ledit signal étant formé d'une succession temporelle de symboles constitués d'un ensemble d'éléments de données, chacun desdits éléments de données modulant une fréquence porteuse dudit signal,
**caractérisé en ce que**, chacun desdits éléments de données étant formé, au codage, par sommation de deux valeurs réelles en quadrature correspondant chacune à un mot binaire d'un signal source modulé selon une constellation de modulation prédéterminée, de façon à transmettre des informations sur une voie réelle est sur une voie imaginaire desdits symboles OFDM/OQAM,
ledit dispositif de décodage comprend :

des moyens de démodulation OFDM/OQAM dudit signal reçu délivrant un signal complexe égalisé ;
- des moyens de traitement dudit signal complexe égalisé comprenant des moyens de :

- sélection d'une desdites voies dudit signal complexe égalisé, appelée première voie;
- traitement de ladite première voie permettant de délivrer une estimation dudit signal source correspondant à ladite première voie, appelé premier signal source estimé ;
- estimation d'une interférence intrinsèque générée par ladite première voie et affectant l'autre desdites voies, appelée deuxième voie, délivrant un signal interfèrent estimé;
- soustraction dudit signal interfèrent estimé audit signal complexe égalisé, de façon à obtenir un signal complexe amélioré ;
- sélection de ladite deuxième voie dudit signal complexe amélioré;
- traitement de ladite deuxième voie permettant de délivrer une estimation dudit signal source correspondant à ladite deuxième voie, appelé deuxième signal source estimé.

**Claims**

**1.** Method for coding an OFDM/OQAM multicarrier signal formed by a temporal succession of symbols consisting of a set of data elements, each of said data elements modulating a carrier frequency of said signal, **characterized in that** each of said data elements is formed by the summation (32) of two real values in quadrature each corresponding to a binary word of a source signal ($30_1$, $30_2$), modulated according to a predetermined modulation constellation ($31_1$, $31_2$),
so as to transmit information over a real channel and over an imaginary channel of said OFDM/OQAM symbols.

**2.** Coding method according to Claim 1, **characterized in that** said summation is a weighted summation, so that one of said channels exhibits a higher power level.

**3.** Coding method according to either of Claims 1 and 2, **characterized in that** said source signals ($30_1$, $30_2$) are correlated.

**4.** Coding method according to Claim 3, **characterized in that** one of said source signals conveys redundancy information linked to the information conveyed by the other source signal.

**5.** Coding method according to Claim 3, **characterized in that** said source signals ($30_1$, $30_2$) are identical and undergo a different channel coding and/or interleaving on each of said channels.

**6.** Coding method according to either of Claims 1 and 2, **characterized in that** said source signals ($30_1$, $30_2$) are signals that are independent of one another.

**7.** Coding method according to any one of Claims 1 to 6, **characterized in that** the information transmitted on each of said channels comprises, on the one hand, source information and, on the other hand, redundancy information computed from said source information.

**8.** Coding method according to any one of Claims 1 to 7, **characterized in that** a different protection level is assigned to the information transmitted over each of said channels, said protection level depending on a channel coding and/or on an order of said predetermined modulation constellation.

9.  OFDM/OQAM multicarrier signal formed by a temporal succession of symbols consisting of a set of data elements, each of said data elements modulating a carrier frequency of said signal, **characterized in that** each of said data elements is formed by the summation of two real values in quadrature each corresponding to a binary word of a source signal, modulated according to a predetermined modulation constellation, so as to transmit information over a real channel and over an imaginary channel of said OFDM/OQAM symbols.

10. Device for coding an OFDM/OQAM multicarrier signal formed by a temporal succession of symbols consisting of a set of data elements, each of said data elements modulating a carrier frequency of said signal, **characterized in that** it comprises means (50) for forming each of said data elements by the summation of two real values in quadrature each corresponding to a binary word of a source signal modulated according to a predetermined modulation constellation, so as to transmit information over a real channel and over an imaginary channel of said OFDM/OQAM symbols.

11. Method for decoding a received OFDM/OQAM multicarrier signal, said signal being formed by a temporal succession of symbols consisting of a set of data elements, each of said data elements modulating a carrier frequency of said signal, **characterized in that**, each of said data elements being formed, on coding, by the summation of two real values in quadrature each corresponding to a binary word of a source signal modulated according to a predetermined modulation constellation, so as to transmit information over a real channel and over an imaginary channel of said OFDM/OQAM symbols, said decoding method comprises:

    - a phase for OFDM/OQAM demodulation of said received signal delivering an equalized complex signal;
    - a phase for processing said equalized complex signal comprising at least one iteration of the steps for:

        - selecting one of said channels of said equalized complex signal, called first channel;
        - processing said first channel making it possible to deliver an estimation of said source signal corresponding to said first channel, called first estimated source signal;
        - estimating an intrinsic interference generated by said first channel and affecting the other of said channels, called second channel, delivering an estimated interfering signal;
        - subtracting said estimated interfering signal from said equalized complex signal, so as to obtain an enhanced complex signal;
        - selecting said second channel of said enhanced complex signal;
        - processing said second channel to deliver an estimation of said source signal corresponding to said second channel, called second estimated source signal.

12. Computer program product downloadable from a communication network and/or stored on a computer-readable and/or microprocessor-executable medium, **characterized in that** it comprises program code instructions for implementing a method for coding a multicarrier signal according to any one of Claims 1 to 8.

13. Computer program product downloadable from a communication network and/or stored on a computer-readable and/or microprocessor-executable medium, **characterized in that** it comprises program code instructions for implementing the steps of the method for decoding a multicarrier signal according to Claim 11.

14. Device for decoding a received OFDM/OQAM multicarrier signal (63), said signal being formed by a temporal succession of symbols consisting of a set of data elements, each of said data elements modulating a carrier frequency of said signal, **characterized in that**, each of said data elements being formed, on coding, by the summation of two real values in quadrature each corresponding to a binary word of a source signal modulated according to a predetermined modulation constellation, so as to transmit information over a real channel and over an imaginary channel of said OFDM/OQAM symbols, said decoding device comprises:

    - means for the OFDM/OQAM demodulation of said received signal delivering an equalized complex signal;
    - means for processing said equalized complex signal comprising means for:

        - selecting one of said channels of said equalized complex signal, called first channel;
        - processing said first channel making it possible to deliver an estimation of said source signal corresponding to said first channel, called first estimated source signal;

- estimating an intrinsic interference generated by said first channel and affecting the other of said channels, called second channel, delivering an estimated interfering signal;

- subtracting said estimated interfering signal from said equalized complex signal, so as to obtain an enhanced complex signal;

- selecting said second channel of said enhanced complex signal;

- processing said second channel to deliver an estimation of said source signal corresponding to said second channel, called second estimated source signal.

**Patentansprüche**

1. Verfahren zur Codierung eines Mehrträgersignals des Typs OFDM/OQAM, das von einer zeitlichen Folge von Symbolen geformt wird, die aus einer Gruppe von Datenelementen bestehen, wobei jedes der Datenelemente eine Trägerfrequenz des Signals moduliert,
   **dadurch gekennzeichnet, dass** jedes der Datenelemente durch Summierung (32) von zwei realen Werten in Quadratur geformt wird, die je einem Binärwort eines Quellensignals ($30_1$, $30_2$) entsprechen, das gemäß einer vorbestimmten Modulationskonstellation ($31_1$, $31_2$) moduliert wird, um Informationen auf einem realen Pfad und auf einem imaginären Pfad der Symbole OFDM/OQAM zu übertragen.

2. Codierverfahren nach Anspruch 1, **dadurch gekennzeichnet, dass** die Summierung eine gewichtete Summierung ist, damit einer der Pfade einen höheren Leistungspegel aufweist.

3. Codierverfahren nach einem der Ansprüche 1 und 2, **dadurch gekennzeichnet, dass** die Quellensignale ($30_1$, $30_2$) korreliert sind.

4. Codierverfahren nach Anspruch 3, **dadurch gekennzeichnet, dass** eines der Quellensignale Redundanzinformationen transportiert, die mit den vom anderen Quellensignal transportierten Informationen verbunden sind.

5. Codierverfahren nach Anspruch 3, **dadurch gekennzeichnet, dass** die Quellensignale ($30_1$, $30_2$) gleich sind und auf jedem der Pfade eine andere Kanalcodierung und/oder Verschachtelung erfahren.

6. Codierverfahren nach einem der Ansprüche 1 und 2, **dadurch gekennzeichnet, dass** die Quellensignale ($30_1$, $30_2$) voneinander unabhängige Signale sind.

7. Codierverfahren nach einem der Ansprüche 1 bis 6, **dadurch gekennzeichnet, dass** die auf jedem der Pfade übertragenen Informationen einerseits Quelleninformationen und andererseits Redundanzinformationen enthalten, die ausgehend von den Quelleninformationen berechnet werden.

8. Codierverfahren nach einem der Ansprüche 1 bis 7, **dadurch gekennzeichnet, dass** den auf jedem der Pfade übertragenen Informationen ein anderer Schutzpegel zugeordnet wird, wobei der Schutzpegel von einer Kanalcodierung und/oder einer Ordnung der vorbestimmten Modulationskonstellation abhängt.

9. Mehrträgersignal des Typs OFDM/OQAM, das von einer zeitlichen Folge von Symbolen geformt wird, die aus einer Gruppe von Datenelementen bestehen, wobei jedes der Datenelemente eine Trägerfrequenz des Signals moduliert, **dadurch gekennzeichnet, dass** jedes der Datenelemente durch Summierung von zwei realen Werten in Quadratur geformt wird, die je einem Binärwort eines Quellensignals entsprechend, das gemäß einer vorbestimmten Modulationskonstellation moduliert wird, um Informationen auf einem realen Pfad und auf einem imaginären Pfad der Symbole OFDM/OQAM zu übertragen.

10. Vorrichtung zum Codieren eines Mehrträgersignals des Typs OFDM/OQAM, das von einer zeitlichen Folge von Symbolen geformt wird, die aus einer Gruppe von Datenelementen bestehen, wobei jedes der Datenelemente eine Trägerfrequenz des Signals moduliert,
    **dadurch gekennzeichnet, dass** sie Einrichtungen (50) zum Formen jedes der Datenelemente durch Summierung von zwei realen Werten in Quadratur enthält, die je einem Binärwort eines Quellensignals entsprechen, das gemäß einer vorbestimmten Modulationskonstellation moduliert wird, um Informationen auf einem realen Pfad und auf einem imaginären Pfad der Symbole OFDM/OQAM zu übertragen.

11. Verfahren zum Decodieren eines empfangenen Mehrträgersignals des Typs OFDM/OQAM, wobei das Signal von einer zeitlichen Folge von Symbolen geformt wird, die aus einer Gruppe von Datenelementen bestehen, wobei jedes der Datenelemente eine Trägerfrequenz des Signals moduliert,
**dadurch gekennzeichnet, dass**, da jedes der Datenelemente beim Codieren durch Summierung von zwei realen Werten in Quadratur geformt wird, die je einem Binärwort eines Quellensignals entsprechen, das gemäß einer vorbestimmten Modulationskonstellation moduliert wird, um diese Informationen auf einem realen Pfad und auf einem imaginären Pfad der Symbole OFDM/OQAM zu übertragen, das Decodierverfahren enthält:

- eine Phase der Demodulation OFDM/OQAM des empfangenen Signals, die ein entzerrtes komplexes Signal liefert;
- eine Phase der Verarbeitung des entzerrten komplexen Signals, die mindestens eine Iteration der folgenden Schritte enthält:

- Auswahl eines der Pfade des entzerrten komplexen Signals, erster Pfad genannt;
- Verarbeitung des ersten Pfads, was es ermöglicht, eine Schätzung des dem ersten Pfad entsprechenden Quellensignals zu liefern, geschätztes erstes Quellensignal genannt;
- Schätzung einer intrinsischen Interferenz, die vom ersten Pfad erzeugt wird und sich auf anderen der Pfade, zweiter Pfad genannt, auswirkt, die ein geschätztes interferierendes Signal liefert;
- Subtraktion des geschätzten interferierenden Signals vom entzerrten komplexen Signal, um ein verbessertes komplexes Signal zu erhalten;
- Auswahl des zweiten Pfads des verbesserten komplexen Signals;
- Verarbeitung des zweiten Pfads, was es ermöglicht, eine Schätzung des dem zweiten Pfad entsprechenden Quellensignals zu liefern, zweites geschätztes Quellensignal genannt.

12. Computerprogrammprodukt, das von einem Kommunikationsnetz heruntergeladen wird und/oder auf einem computerlesbaren Träger gespeichert ist und/oder von einem Mikroprozessor ausgeführt werden kann, **dadurch gekennzeichnet, dass** es Programmcodeanweisungen zur Durchführung des Verfahrens zum Codieren eines Mehrträgersignals nach einem der Ansprüche 1 bis 8 enthält.

13. Computerprogrammprodukt, das von einem Kommunikationsnetz heruntergeladen wird und/oder auf einem computerlesbaren Träger gespeichert ist und/oder von einem Mikroprozessor ausgeführt werden kann, **dadurch gekennzeichnet, dass** es Programmcodeanweisungen zur Durchführung der Schritte des Verfahrens zum Decodieren eines Mehrträgersignals nach Anspruch 11 enthält.

14. Vorrichtung zum Decodieren eines empfangenen Mehrträgersignals (63) des Typs OFDM/OQAM, wobei das Signal von einer zeitlichen Folge von Symbolen geformt wird, die aus einer Gruppe von Datenelementen bestehen, wobei jedes der Datenelemente eine Trägerfrequenz des Signals moduliert,
**dadurch gekennzeichnet, dass**, da jedes der Datenelemente beim Codieren durch Summierung von zwei realen Werten in Quadratur geformt wird, die je einem Binärwort eines Quellensignals entsprechen, das gemäß einer vorbestimmten Modulationskonstellation moduliert wird, um Informationen auf einem realen Pfad und auf einem imaginären Pfad der Symbole OFDM/OQAM zu übertragen,
die Decodiervorrichtung enthält:

- Einrichtungen zur Demodulation OFDM/OQAM des empfangenen Signals, die ein entzerrtes komplexes Signal liefern;
- Einrichtungen zur Verarbeitung des entzerrten komplexen Signals, die Einrichtungen enthalten zur:

- Auswahl eines der Pfade des entzerrten komplexen Signals, erster Pfad genannt;
- Verarbeitung des ersten Pfads, was es ermöglicht, eine Schätzung des dem ersten Pfad entsprechenden Quellensignals zu liefern, geschätztes erstes Quellensignal genannt;
- Schätzung einer intrinsischen Interferenz, die vom ersten Pfad erzeugt wird und sich auf den anderen der Pfade, zweiter Pfad genannt, auswirkt, die ein geschätztes interferierendes Signal liefert;
- Subtraktion des geschätzten interferierenden Signals vom entzerrten komplexen Signal, um ein verbessertes komplexes Signal zu erhalten;
- Auswahl des zweiten Pfads des verbesserten komplexen Signals;
- Verarbeitung des zweiten Pfads, was es ermöglicht, eine Schätzung des dem zweiten Pfad entsprechenden Quellensignals zu liefern, zweites geschätztes Quellensignal genannt.

$\tau_0$

$2 \times \tau_0 = T_u$

Fig. 1

20    21    22    23    24    25    26    27

1:N    IFFT    IOTA    N:1 → 28

Fig. 2

$30_1$    $31_1$    22    23    24    25    26    27

$\lambda_1$

$i\lambda_2$

32

1:N    IFFT    IOTA    N:1 → 38

$30_2$    $31_2$

Fig. 3

40

$X_i$ → □ → $X_i$
→ $Y_{1,i}$
→ $Y_{2,i}$

<u>Fig. 4</u>

$30_1$

50

38

μP

51      52

$30_2$

M ↔ Pg

<u>Fig. 5</u>

60

63      64

μP

61      62

M ↔ Pg

<u>Fig. 6</u>

71

72

70

<u>Fig. 7</u>

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2733869
- WO 0225884 A
- US 20030063680 A
- WO 2006117268 A

**Littérature non-brevet citée dans la description**

- Theory and design of multipulse multicarrier systems for wireless communications. *IEEE,* 09 Novembre 2003, vol. 1, 2